# EUROPEAN PATENT APPLICATION

(11) **EP 1 821 289 A2**
(43) Date of publication of application: **22.08.2007**
(21) Application number: 06252489.7
(22) Date of filing: 11.05.2006
(51) Int. Cl.: G11B 5/31, H01F 10/00, H01F 41/32

(54) **Soft magnetic thin film, method of producing the same, and magnetic head**

(30) Priority: 15.02.2006 JP 2006037725
(71) Applicant: FUJITSU LIMITED, Kawasaki-shi, Kanagawa 211-8588 (JP)
(72) Inventor: Miyake, Yuko, Fujitsu Limited, Kawasaki-shi, Kanagawa 211-8588 (JP)
(74) Representative: Stebbing, Timothy Charles

(57) **Abstract**

The soft magnetic thin film (24, 30) has high saturation magnetic flux density and superior soft magnetic characteristics, and is suitable for use as a magnetic film of a magnetic head of a magnetic disk drive unit. The soft magnetic thin film (24, 30), which is made of an alloy including two or three elements selected from a group consisting of Fe, Co and Ni, is formed by an electrolytic plating process, and internal stress of the plated film is 400 MPa or more.

## Description

The present invention relates to a soft magnetic thin film, which has high saturation magnetic flux density and superior soft magnetic characteristics and which is suitable for use as a magnetic film of a magnetic head of a magnetic disk drive unit; a method of producing the soft magnetic thin film; and a magnetic head including the soft magnetic thin film.

A magnetic head of a magnetic disk drive unit has an upper magnetic pole and a lower magnetic pole, which are constituted by magnetic films. End faces of the magnetic poles, which face a recording medium, are made narrow and include thick films having a thickness of 3-4 µm, so as to converge magnetic flux at the end faces. These are formed by a plating process, by which the films can be selectively formed with high deposition efficiency.

With improvement of recording density, a material of a magnetic head should have high saturation magnetic flux density (Bs) and superior soft magnetic characteristics. Especially, for a perpendicular recording magnetic head which has been developed as a next-generation recording head, the Bs of a material of a main magnetic pole must be higher and higher, and the soft magnetic characteristics thereof must be superior to those of the conventional longitudinal recording head.

In Japanese Patent Gazette No. 2002-280217 (Document 1), FeCo, whose saturation magnetic flux density (Bs) is the highest among alloys, is used as a material for the new magnetic head, and a method of forming a soft magnetic film by a plating process is disclosed. In Japanese Patent Gazette No. 2004-127479 (Document 2), a base layer made of Ru is used for improving soft magnetic characteristics of FeCoNi used as a magnetic film of a magnetic recording head. Further, in Japanese Patent Gazette No. 2005-86012 (Document 3), a FeCo film, which is formed by a plating process, is oriented so as to have a crystal structure of bcc (110).

However, the saturation magnetic flux density (Bs) of the FeCo-plated film disclosed in Document 1 is higher than that of the conventional plated film, but it is difficult to improve soft magnetic characteristics due to great magnetostriction, and a coercive force must be greater. If the coercive force is great, high-frequency response must be worse. The Bs of the FeCoNi thin film disclosed in Document 2 must be lowered due to Ni, so the Bs of 2.3T cannot be gained. Further, The FeCo-plated film disclosed in Document 3 has the Bs of 2.3T or more, but the base layer for orientating the plated film to bcc(110) must be limited, so the plated film is unsuitable for some producing processes.

The present invention was made in view of the above described problems.

An embodiment of the present invention may provide a soft magnetic thin film, which has high saturation magnetic flux density and superior soft magnetic characteristics and which can be suitably used as a magnetic film of a magnetic head of a magnetic disk drive unit.

Another embodiment may provide a method of producing the soft magnetic thin film.

A further embodiment may provide a magnetic head including the soft magnetic thin film.

The present invention has the following features.

Namely, the soft magnetic thin film, which is made of an alloy including two or three elements selected from a group consisting of Fe, Co and Ni, is formed by an electrolytic plating process, and internal stress of the plated film is 400 MPa or more.

For example, the composition of the alloy may be FeₓCo (60≦x≦80at%), FeₓNi (70≦x≦99at%) or FeₓCo_{y}Ni_{z} (50≦x≦90at%, 10≦y≦50at% and 0≦z≦20at%). Since the internal stress of the plated film is 400 MPa or more, the soft magnetic film has enough saturation magnetic flux density and a coercive force can be restrained, so that the magnetic thin film having superior soft magnetic characteristics can be realized.

One method of producing a soft magnetic thin film comprises the steps of: forming a magnetic thin film, which is made of an alloy including two or three elements selected from a group consisting of Fe, Co and Ni, by an electrolytic plating process; and annealing the magnetic thin film at temperature of 150°C or more.

Another method of producing a soft magnetic thin film comprises the step of forming a magnetic thin film, which is made of an alloy including two or three elements selected from a group consisting of Fe, Co and Ni, by an electrolytic plating process, and a stress relaxation agent, whose structural formula includes a bond of [=C-SO₂-][-C-N-], or a primary brightening agent, whose additive quantity is less than 0.2 g/l, is used for the electrolytic plating process.

By annealing the magnetic thin film or controlling quantity of the stress relaxation agent and the primary brightening agent, the internal stress of the plated film can be increased, so that characteristics of the magnetic thin film can be improved without performing complex steps.

The magnetic head comprises a write-head, which includes an upper magnetic pole, a lower magnetic pole and a magnetic gap layer located between the magnetic poles, and the upper magnetic pole and/or the lower magnetic pole includes said soft magnetic thin film.

A perpendicular recording magnetic head embodying the invention comprises a main magnetic pole, and the main magnetic pole includes said soft magnetic thin film. Another perpendicular recording magnetic head comprises a main magnetic pole and a trailing shield, and the main magnetic pole or the trailing shield includes said soft magnetic thin film. The magnetic heads have the soft magnetic thin film of the present invention, so they can perform high density recording, and they have superior high-frequency characteristics. Since the soft magnetic thin film is produced by the annealing step, etc., the magnetic heads of the present invention can be easily produced by a conventional production process.

Since the soft magnetic thin film of the present invention has high saturation magnetic flux density and superior soft magnetic characteristics, it can be applied to a magnetic head of a magnetic disk drive unit. The method of the present invention includes the annealing step or adjusts composition of the plating solution, so the conventional production process can be easily applied.

Embodiments of the present invention will now be described by way of examples and with reference to the accompanying drawings, in which:
Fig. 1 is a graph showing stress dependency of coercive forces of FeCo-plated films in directions of difficult axes;
Fig. 2 is a graph showing stress dependency of the coercive forces of the FeCo-plated films in directions of easy axes;
Fig. 3 is a graph showing annealing temperature dependency of the coercive forces of the FeCo-plated films in directions of the difficult axes;
Fig. 4 is a graph showing annealing temperature dependency of the coercive forces of the FeCo-plated films in directions of the easy axes;
Fig. 5 is a graph showing annealing temperature dependency of internal stress of the FeCo-plated films;
Fig. 6 is a graph showing stress relaxation agent-concentration dependency of internal stress of the FeCo-plated films;
Fig. 7 is a graph showing stress dependency of coercive forces of FeNi-plated films in directions of difficult axes;
Fig. 8 is a graph showing stress dependency of the coercive forces of the FeNi-plated films in directions of easy axes;
Fig. 9 is a graph showing annealing temperature dependency of the coercive forces of the FeNi-plated films in directions of the difficult axes;
Fig. 10 is a graph showing annealing temperature dependency of the coercive forces of the FeNi-plated films in directions of the easy axes;
Fig. 11 is a graph showing annealing temperature dependency of internal stress of the FeNi-plated films;
Fig. 12 is a sectional view of a magnetic head using the soft magnetic thin film of the present invention; and
Fig. 13 is a sectional view of another magnetic head using the soft magnetic thin film of the present invention.

Preferred embodiments of the present invention will now be described in detail with reference to the accompanying drawings.

The soft magnetic thin film of the present invention is made of an alloy including two or three elements selected from a group consisting of Fe, Co and Ni, formed by an electrolytic plating process and characterized in that internal stress of the plated film is 400 MPa or more. To increase the internal stress in the film, the magnetic thin film, which is formed by the electrolytic plating process, is annealed, or quantity of a stress relaxation agent for the electrolytic plating is limited.

### (FeCo Alloy Thin Film)

A method of producing a FeCo alloy film, which works as the soft magnetic thin film of the present invention, will be explained.

Substrates made of Al₂O₃-TiC were used, and base films for plating were formed thereon by spattering (sputtering) or vapor deposition. Further, FeCo-plated films were formed on the base films by an electrolytic plating process. The base films may be magnetic films or nonmagnetic films. Thickness of the base film is determined on the basis of sheet resistance, which influences distribution of the FeCo-plated film. The sheet resistance is relevant to specific resistance of a metal, so if a metal having high specific resistance is used, the film should be made thick. When a slider, which is a base body of a magnetic head, is processed, if a shunting process, in which parts of the magnetic head are electrically connected to the substrate so as to prevent elements from damaging by static electricity, is applied, the sheet resistance is reduced without reference to the material, so the thickness of the base film need not be considered.

Note that, to tightly stick (adhere) the FeCo-plated films on the substrates, Ti films having thickness of 5-10 nm were formed on the substrates, then the base films were formed thereon. Ta, Cr, Nb, etc. may be used instead of Ti so as to tightly stick the FeCo-plated films.

**TABLE 1**

| CHEMICALS | CONCENTRATION (g/l) | FILM-FORMING CONDITIONS | |
|---|---|---|---|
| BORIC ACID | 8-40 | TEMPERATURE OF SOLUTION(°C) | 20-35 |
| ELECTRICALLY CONDUCTIVE AGENT | 4-60 | pH | 2-3 |
| FERROUS SULFATE | 5-35 | AVERAGE CURRENT DENSITY(mA/cm²) | 3-25 |
| COBALT SULFATE | 3-35 | DUTY RATIO(%) | 5-75 |
| STRESS RELAXATION AGENT | 3> | FREQUENCY(Hz) | 1-50 |
| SURFACE ACTING AGENT | 1> | | |

Composition of a plating solution and film-forming conditions are shown in TABLE 1. The solution included sulfate test reagents of Co and Fe, boric acid, an electrically conductive agent and a stress relaxation agent so as to supply Co ions and Fe ions. The stress relaxation agent is an organic compound, whose structural formula includes a bond of [=C-SO₂-][-C-N-]. In the present embodiment, saccharin sodium was used. Further, naphthalene-1, 3, 6-trisulfonate, naphthalene-1, 5,-disulfonate etc., whose structural formulas include [=C-SO₂-] and exclude [-N-], are ordinary test reagents and may be added to the FeCo-plating solution.

Mixed quantity of the stress relaxation agent in the plated film is varied by not only chemical absorptive power of the stress relaxation agent but also other ions in the plating solution. For example, if ions including nitrogen, e.g., ammonium ions, exist in the plating solution, and the chemical absorptive power of nitrogen accelerates the stress relaxation agent to mix in the plated film. This function is remarkable when a resist pattern exists. However, if the acceleration is too much, the stress relaxation agent reduces not only internal stress but also saturation magnetic flux density (Bs). The reduction of Bs is undesirable.

In case of using an organic compound, whose structural formula includes [=C-SO₂-][-C-N-], as the stress relaxation agent, an electrically conductive agent should be considered. Test reagents of chloride salts, sulfates or sulfamates, in each of which the cation is alkali metal or hydrogen, are used as the electrically conductive agents. For example, sodium chloride, potassium chloride, lithium chloride, sodium sulfate, etc. may be used. In the present embodiment, sodium chloride was used.

The FeCo-plated films were formed in a direct-current magnetic field of about 64 KA/m. The film forming conditions will be explained.

Considering current efficiency and avoiding oxidation of iron ions, suitable pH value for forming the film is 2.0-3.0. In the present embodiment, the films were formed with the pH of 2.3. The pH value was adjusted by sulfuric acid. Note that, the pH value may be adjusted by hydrochloric acid. To increase the pH value, ammonia, sodium hydrate, etc. may be used. However, sodium hydrate easily forms deposits of hydrates, so using sodium hydrate is discouraged.

Pulse currents were applied. Average current density of the pulse currents was 3-25 mA/cm²; duty cycle thereof was 5-75 %; and frequency thereof was 1-100 Hz. The films can be formed with direct current, but roughness of a surface of a plated film will be greater than that of an FeCo film plated with the pulse current.

The FeCo film plated with the pulse current had Ra≦5 nm, so the film had high flatness. Temperature of the plating solution was 20-35°C. If the temperature is too high, oxidization of iron will be accelerated so that life span of the solution will be shortened. The suitable temperature of the solution is 30°C or less. Note that, preferably, N₂-bubbling may be performed so as to restrain the oxidization of the solution. Further, frequent opening and shutting of the lid of a solution bath should be avoided so as to minimise oxidization.

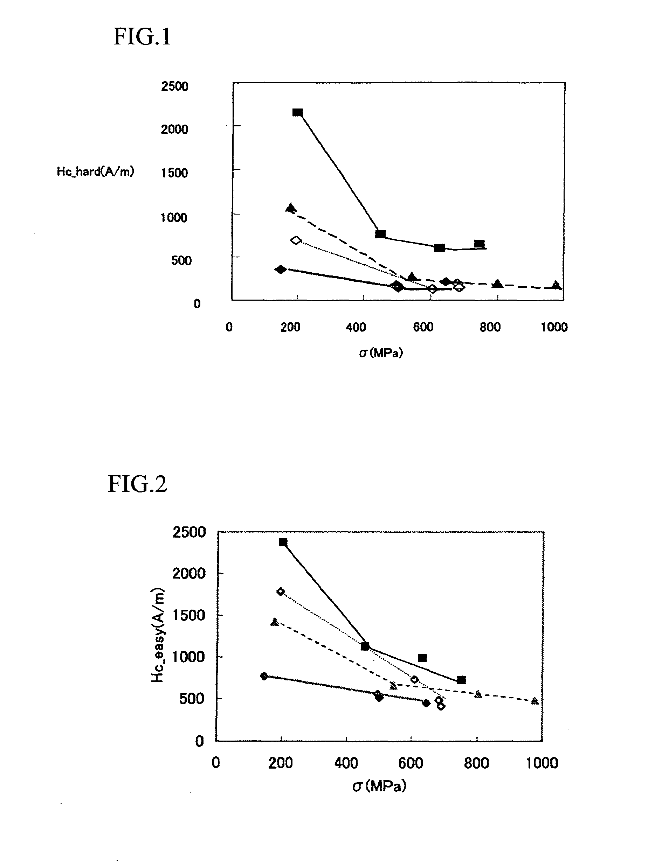

Fig. 1 is a graph showing stress dependency of coercive forces of FeCo-plated films in directions of difficult axes; Fig. 2 is a graph showing stress dependency of the coercive forces of the FeCo-plated films in directions of easy axes. In Figs. 1 and 2, four kinds of base films were used.

Composition of the FeCo-plated films was FeₓCo₁₀₀₋ₓ (65≦x≦75 wt%) without reference to the kinds of the base films, and saturation magnetic flux density (Bs) thereof were 2.3T or more. When x was 60≦x≦80 wt%, the Bs were Bs≧2.25T.

As shown in Figs. 1 and 2, the coercive forces in the directions of the difficult axes and the easy axes were reduced with increasing internal stress (σ) of the FeCo-plated films. Note that, the coercive forces were changed according to the base films, but the tendency of reducing the coercive force with increase in internal stress was observed in all of the FeCo films. However, the stress dependency of the coercive force did not clearly appear in the film, whose base film had remarkably soft magnetic characteristics, so characteristics of such film must be studied separately.

Stress of a plated film can be increased by annealing. An annealing atmosphere is determined on the basis of a method of producing the film. In the present embodiment, annealing was performed in a vacuum atmosphere. A holding time of annealing is also determined by the method of producing the film. In the present embodiment, the holding time was one hour. Application of a magnetic field for annealing (a magnetizing direction while forming the film by plating) is also determined by the method of producing the film. However, in the present embodiment, no magnetic field was applied.

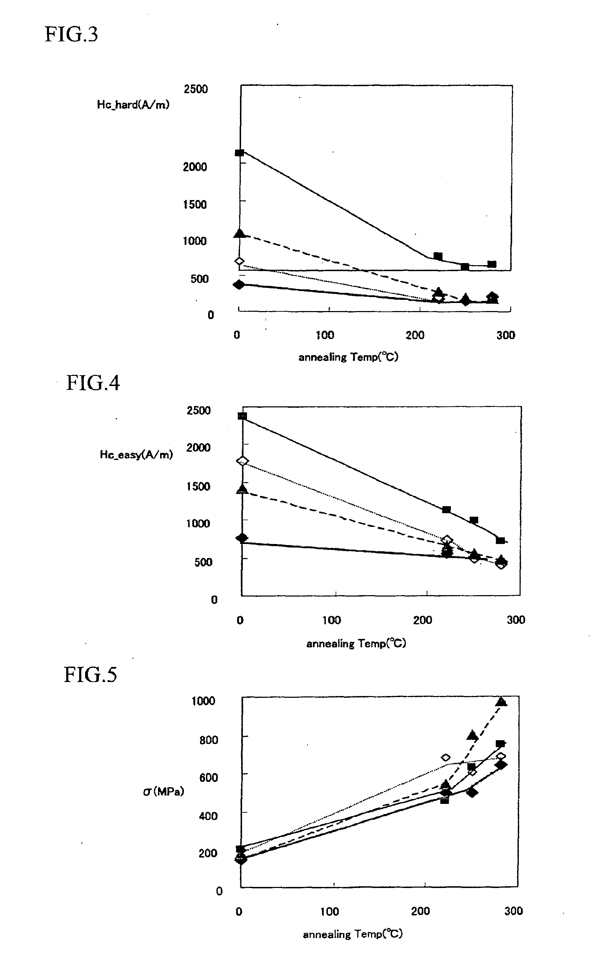

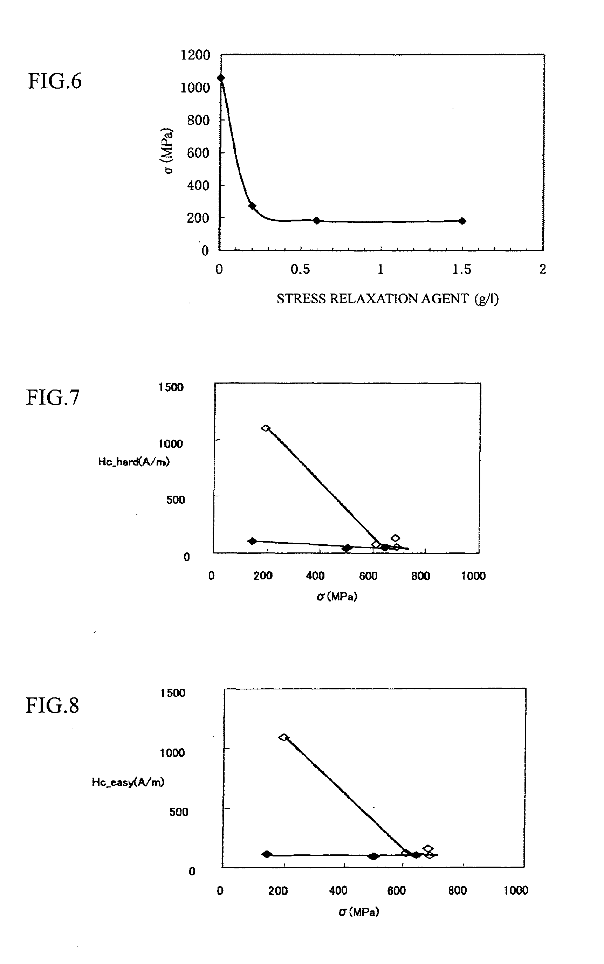

Variations of the coercive forces in the difficult axis directions, the coercive forces in the easy axis directions and the internal stress in the plated films with respect to the annealing temperature are shown in Figs. 3-5. According to Fig. 5, the internal stress in the plated films increased with increase in the annealing temperature. According to Figs. 3 and 4, the coercive forces were reduced with increasing annealing temperature, and the coercive forces in the difficult axis directions were maintained at the annealing temperature of 150°C or more. Therefore, the coercive forces can be reduced by annealing at temperature of 150°C or more. Note that, the maximum annealing temperature should not exceed the recrystallization temperature of the magnetic film.

To effectively increase the internal stress of the plated films, the quantity of stress relaxation agent, which is added to the plating solution, may be controlled. Fig. 6 is a graph showing stress relaxation agent-concentration dependency of the internal stress (σ) of the plated films. When concentration of the stress relaxation agent was less than 0.2 g/l, the internal stress increased. Namely, the coercive forces of the FeCo-plated films could be reduced, and soft magnetic characteristics of the FeCo-plated films could be improved. In other cases, the internal stress of the plated film can be increased by controlling additive quantity of a primary brightening agent instead of the stress relaxation agent.

### (FeNi Alloy Thin Film)

Successively, variations of coercive forces in FeₓNi (70≦x≦99 at%)-plated films with respect to the internal stress therein will be explained.

The same substrates and the same base films, which were used for producing the above described FeCo alloy thin films, were used in the present embodiment.

**TABLE 2**

| CHEMICALS | CONCENTRATION (g/l) | FILM-FORMING CONDITIONS | |
|---|---|---|---|
| BORIC ACID | 8-40 | TEMPERATURE OF SOLUTION (°C) | 20-35 |
| ELECTRICALLY CONDUCTIVEAGENT | 4-60 | pH | 2-3 |
| FERROUS SULFATE | 5-35 | AVERAGE CURRENT DENSITY(mA/cm²) | 3-25 |
| NICKEL SULFATE | 15-90 | DUTYRATIO(%) | 5-75 |
| STRESS RELAXATIONAGENT | 6> | FREQUENCY(Hz) | 1-50 |
| SURFACE ACTING AGENT | 1> | | |

Composition of a plating solution and film-forming conditions are shown in TABLE 2. The solution included sulfate test reagents of Ni and Fe, boric acid, an electrically conductive agent and a stress relaxation agent so as to supply Ni ions and Fe ions. Other compositions and the plating conditions were the same as those of the embodiment of producing the FeCo-plated films, so explanation will be omitted.

When composition of the FeNi-plated films was 80≦x≦99 at%, saturation magnetic flux density (Bs) thereof was 2T or more without reference to the kinds of the base films; when the composition was 90 wt%≦x, the saturation magnetic flux density thereof was Bs>2.1T.

The FeNi-plated films have microcrystal structures without dependence on the base films for plating. Their soft magnetic characteristics are varied little by changing crystal structures.

Fig. 7 is a graph showing stress dependency of coercive forces of FeNi-plated films in directions of difficult axes; and Fig. 8 is a graph showing stress dependency of the coercive forces of the FeNi-plated films in directions of easy axes. In the both graphs, the coercive forces were reduced with increasing internal stress of the plated films.

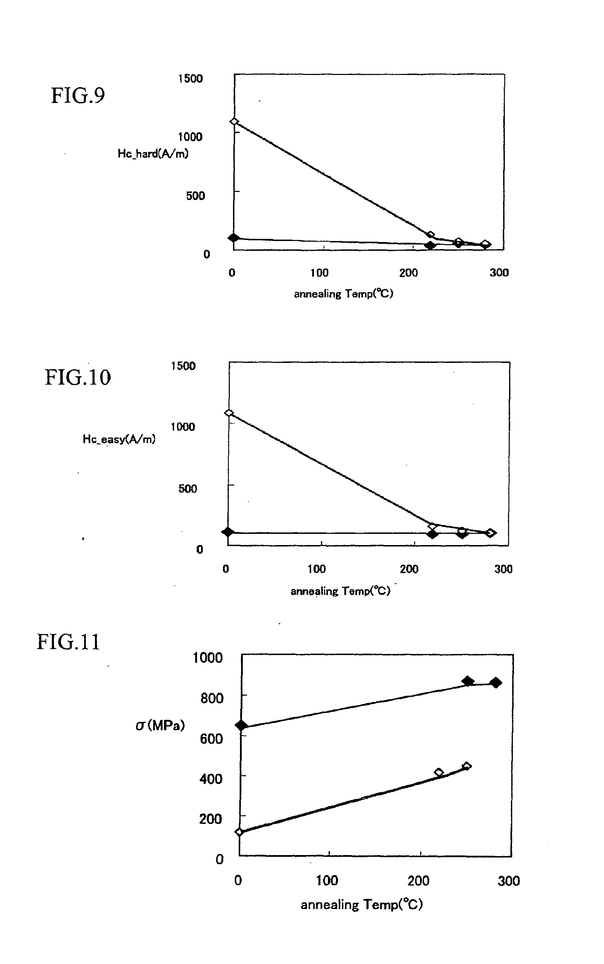

Variations of the coercive forces in the difficult axis directions, the coercive forces in the easy axis directions and the internal stress in the plated films with respect to the annealing temperature are shown in Figs. 9-11. According to Figs. 9 and 10, the coercive forces were reduced with increasing annealing temperature. According to Fig. 11, the internal stress was increased with increasing annealing temperature.

Even if soft magnetic characteristics of a FeNi-plated film are bad immediately after forming the plated film, the soft magnetic characteristics can be improved by annealing the plated film. According to Figs. 9-11, a preferable annealing temperature is 150°C or more, more preferably 200°C or more.

Note that the internal stress can be increased by controlling concentration of a stress relaxation agent, but cracks are sometimes formed in plated films. Therefore, the concentration of the stress relaxation agent should be higher than that of the stress relaxation agent used for plating the FeCo films so as to stably form the FeNi-plated films.

In the above described embodiments, the magnetic films are an FeCo-plated film or an FeNi-plated film. Further, a magnetic film having composition of FeₓCo_{y}Ni_{z} (50≦x≦90at%, 10≦y≦50at% and 0≦z≦20at%) having soft magnetic characteristics may be used as well as said FeCo-plated film and said FeNi-plated film.

### (Magnetic Head)

The FeCo-plated film of an embodiment has Bs>2.3T and Hc_h<200 A/m; the FeNi-plated film of an embodiment has Bs>2.1T and Hc_h<50 A/m. So they have high Bs and superior soft magnetic characteristics, and they can be effectively used for magnetic films constituting a magnetic head of a magnetic disk drive unit.

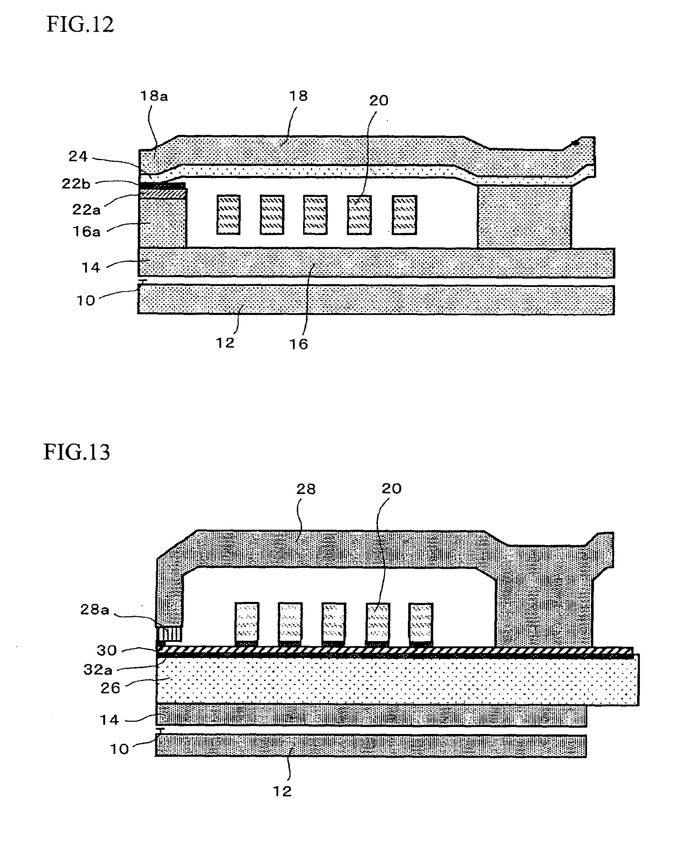

In Fig. 12, the soft magnetic thin film of the present invention is used in a magnetic gap layer of a magnetic head. The magnetic head comprises: a read-head including an MR element 10, which acts as a read-element, a lower shielding layer 12 and an upper shielding layer 14, which sandwiches the MR element 10 with the lower shielding layer 12; and a write-head including a lower magnetic pole 16, an upper magnetic pole 18 and a coil 20. Note that the upper shielding layer 14 acts as the lower magnetic pole 16 of the write-head.

An end pole section 16a of the lower magnetic pole 16 and an end pole section 18a of the upper magnetic pole 18 are formed in an end section of the write-head, which faces a recording medium. A write-gap is formed between the end pole sections 16a and 18a. In the present embodiment, a write-gap layer is constituted by an insulating layer 22a, which is made of alumina, SiO₂, etc., and a seed layer 22b, which is formed on the insulating layer 22a. If the seed layer 22b is a nonmagnetic film, the seed layer 22b may solely act as the write-gap layer. A magnetic thin film 24 is the soft magnetic thin film of the present invention. The magnetic film 24 may be produced by the steps of: forming a magnetic film by the electrolytic plating process; and annealing the magnetic film. In another case, a process for plating the magnetic film 24 is controlled to increase the inner stress thereof so as to improve soft magnetic characteristics. By employing the soft magnetic thin film of the present invention, the write-head is capable of performing high density recording and improving high-frequency characteristics.

In Fig. 13, the soft magnetic thin film of the present invention is used in a perpendicular recording (also called vertical recording) magnetic head. The perpendicular recording magnetic head includes a write-head, which comprises a main magnetic pole 26 and a return yoke 28. A trailing shield 28a is formed at a front end of the return yoke 28, and the soft magnetic thin film of the present invention is used as a magnetic thin film 30. A nonmagnetic conductive layer 32a is formed as a base layer for plating and forming the magnetic thin film 30.

Note that, the soft magnetic thin film of the present invention may be used in the trailing shield 28a.

Since the soft magnetic thin film of the present invention has high saturation magnetic flux density and superior soft magnetic characteristics, the magnetic head, in which the soft magnetic thin film is used in the main magnetic pole 26 or the trailing shield 28a, is capable of performing high density recording and highly improving high-frequency characteristics.

The invention may be embodied in other specific forms without departing from the essential characteristics thereof. The present embodiments are therefore to be considered in all respects as illustrative and not restrictive.

## Claims

1. A soft magnetic thin film (24, 30), which is made of an alloy including two or three elements selected from a group consisting of Fe, Co and Ni, formed by an electrolytic plating process, **characterized in that** the internal stress of the plated film is 400 MPa or more.

2. The soft magnetic thin film (24, 30) according to claim 1,
wherein the composition of the alloy is FexCo (60≦x≦80at%).

3. The soft magnetic thin film (24, 30) according to claim 1,
wherein the composition of the alloy is FexNi (70≦x≦99at%).

4. The soft magnetic thin film (24, 30) according to claim 1,
wherein the composition of the alloy is FexCoyNiz (50≦x≦90at%, 10≦y≦50at% and 0≦z≦20at%).

5. A method of producing a soft magnetic thin film (24, 30), comprising the step of forming a magnetic thin film, which is made of an alloy including two or three elements selected from a group consisting of Fe, Co and Ni, by an electrolytic plating process, **characterized in that** the magnetic thin film (24, 30) is annealed at temperature of 150°C or more.

6. A method of producing a soft magnetic thin film (24, 30), comprising the step of forming a magnetic thin film, which is made of an alloy including two or three elements selected from a group consisting of Fe, Co and Ni, by an electrolytic plating process, **characterized in that** a stress relaxation agent, whose structural formula includes a bond of [=C-SO₂-][-C-N-], or a primary brightening agent, whose additive quantity is less than 0.2 g/l, is used for the electrolytic plating process.

7. A magnetic head comprising a write-head, which includes an upper magnetic pole (18), a lower magnetic pole (16) and a magnetic gap layer (22a, 22b) located between the magnetic poles (16, 18), **characterized in that** the upper magnetic pole (18) and/or the lower magnetic pole (16) includes the soft magnetic thin film (24) according to one of claims 1-4.

8. A perpendicular recording magnetic head comprising a main magnetic pole (26), **characterized in that** the main magnetic pole (26) includes the soft magnetic thin film (24) according to one of claims 1-4.

9. A perpendicular recording magnetic head comprising a main magnetic pole (26) and a trailing shield (28a), **characterized in that** the main magnetic pole (26) or the trailing shield (28a) includes the soft magnetic thin film (30) according to one of claims 1-4.
